# EUROPEAN PATENT APPLICATION

(11) **EP 2 015 545 A2**
(43) Date of publication of application: **14.01.2009**
(21) Application number: 08157763.7
(22) Date of filing: 06.06.2008
(51) Int. Cl.: H04M 1/23

(54) **Key structure with multiple appearance effects simultaneously presented at different angles of view**

(30) Priority: 07.06.2007 CN 200720147494 U
(71) Applicant: Silitech Technology Corp., Tamsui, Taipe Hsien (TW)
(72) Inventor: Chien, Chao-Hsien, Taishan Township (TW); Yao, Wen-Chin, Rueifang Township (TW)
(74) Representative: Viering, Jentschura & Partner

(57) **Abstract**

A key structure with multiple appearance effects simultaneously presented at different angles of view, includes: a multi-mode appearance layer, an elastic structure layer and a keypad structure layer. Herein the surface of the multi-mode appearance layer has a plurality of micro-structures which reflect the incident light sources of different wavelengths to different angles. The elastic structure is placed under the multi-mode appearance layer. The keypad structure layer is placed on the multi-mode appearance layer. Thereby, through the micro-structures reflecting the incident light sources of different wavelengths to different angles, a user can see different appearance effects of different patterns at different angles of view. Therefore, the present invention can be applied to the keypad structure of holography, so as to achieve the effect of multi-mode appearance presentation.

## Description

### BACKGROUND OF THE INVENTION

### 1: Field of the Invention

The present invention relates to a key structure; in particular to a key structure with multiple appearance effects simultaneously presented at different angles of view.

### 2. Description of Related Art

Since the advent of information technology era, along with the striding progress in the field of communication network technology, mobile phones (or also referred as cellular phones) have now become one of the most commonly used communication tools in today's world. Mobile telephones are becoming more and more popular worldwide because of its small size, convenience for carriage, complete functions and affordable price. For general consumers, when purchasing mobile phones, they mostly tend to consider the features and styles of the mobile phones as critical factors for selection; meanwhile the market, in response to consumers' preferences and needs, promotes full-function, novel-style mobile phones to attraction consumers' eyesight as well.

Conventional keypad modules use technologies such as printing, plating to implement the effects of different texture, font or color. However, conventional keypad modules can not simultaneously present more than two appearance effects.

As such, in practical application, conventional keypad modules obviously have improvable disadvantages and problems.

Accordingly, the inventors of the present application having considered the above-mentioned improvable defects and disadvantages, and also based on their experiences in relevant fields of long-term operation, in conjunction with thorough observations and researches, along with use of academic theory, have thus proposed the present invention of reasonable design which can effectively resolve the aforesaid defects and problems.

### SUMMARY OF THE INVENTION

The technical issues that the present invention is addressed to resolve is to provide a key structure with multiple appearance effects simultaneously presented at different angles of view. The objective of the present invention is: to apply the technology of holography on the key structure, such that the same key structure can simultaneously present different appearance effects, e.g. texture, font or color, at different angles of view.

To resolve the above-mentioned technical issues, one method according to the present invention provides a key structure with multiple appearance effects simultaneously presented at different angles of view, comprising: a multi-mode appearance layer, an elastic structure layer and a keypad structure layer. Herein the surface of the multi-mode appearance layer has a plurality of micro-structures which reflect the incident light sources of different wavelengths to different angles. The elastic structure is placed under the multi-mode appearance layer. The keypad structure layer is placed on the multi-mode appearance layer.

Thereby, through the micro-structures reflecting the incident light sources of different wavelengths to different angles, a user can see different appearance effects of different patterns at different angles of view. Therefore, the present invention can be applied to the keypad structure of holography, so as to achieve the effect of multi-mode appearance presentation.

In order to further understand the techniques, means and effects taken by the present invention to achieve the prescribed objectives as above, references are made to the following detailed descriptions of the present invention and appended diagrams thereof, and it is believed that the objectives, characteristics and features of the present invention can be thereby thoroughly and concretely appreciated; whereas, the appended drawings are simply for purposes of reference and illustration, without any intention to restrict the scope of the present invention thereto.

### BRIEF DESCRIPTION OF THE DRAWINGS

Fig. 1 shows a cross-section view of the key structure according to the present invention with multiple appearance effects simultaneously presented at different angles of view;
Fig. 2 shows a first appearance effect presented at a first angle of view by the key structure according to the present invention; and
Fig. 3 shows a second appearance effect presented at a second angle of view by the key structure according to the present invention.

### DETAILED DESCRIPTION OF THE PREFERRED EMBODIMENTS

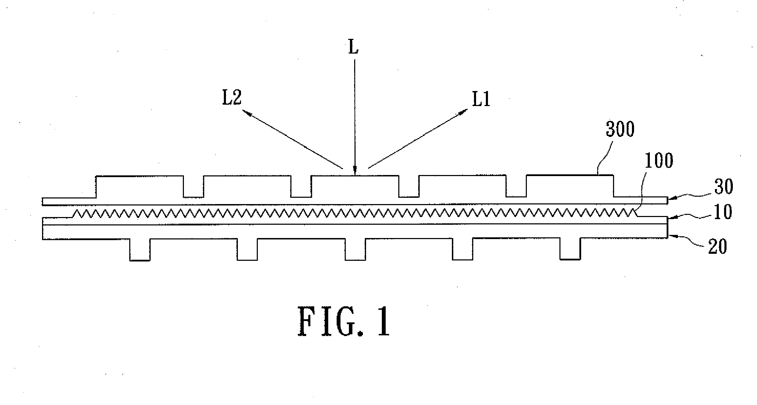

Refer now to Figs. 1 to 3, wherein the cross-section view of the key structure according to the present invention with multiple appearance effects simultaneously presented at different angles of view, a first appearance effect presented at a first angle of view by the key structure according to the present invention, and a second appearance effect presented at a second angle of view by the key structure according to the present invention are respectively shown. As can be seen from Fig. 1, the present invention provides a key structure with multiple appearance effects simultaneously presented at different angles of view, comprising: a multi-mode appearance layer 10, an elastic structure layer 20 and a keypad structure layer 30.

Herein the surface of the multi-mode appearance layer 10 has a plurality of micro-structures 100 which reflect the incident light sources L of different wavelengths to different angles (reflected light source L1 at a first angle and reflected light source L2 at a second angle). The elastic structure 20 can be made of silicon material, which is placed under the multi-mode appearance layer 10. Furthermore, the keypad structure layer 30 is composed of a plurality of keys 300, and such layer 30 is placed on the multi-mode appearance layer 10. Thereby, through the micro-structures 100 reflecting the incident light sources L of different wavelengths to different angles, a user can see different appearance effects of different patterns at different angles of view.

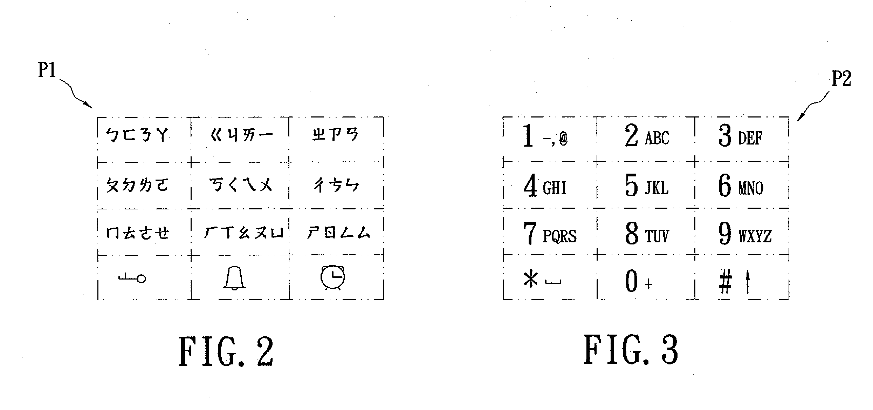

Therefore, in terms of the disclosed embodiment in the present invention, the said micro-structures 100 are divided into at least two micro-structure sets with different appearance effects; thus, through the at least two micro-structure sets with different appearance effects, a user can see at two sets of appearance effects corresponding to the keypad structure layer 30 at different angles of view (e.g. the first pattern P1 shown in Fig. 2 and the second pattern P2 shown in Fig. 3). In other word, the present invention designs the micro-structures 100 into micro-structures of differing angle and density, such that the incident light sources L with different wavelengths may reflect to different angles by means of diffraction phenomenon, which allows the user to see appearance effects with differing pattern at different angles of view.

In summary, the objective of the present invention lies in: to apply the technology of holography on the key structure, such that the same key structure can simultaneously present different appearance effects, e.g. texture, font or color, at different angles of view (the first pattern P shown in Fig. 2 and the second pattern P2 shown in Fig. 3 present differing appearance effects, for example). Consequently, the present invention applies holography onto the key structure so as to achieve the effect of multi-mode appearance.

The illustrations set out as above provide simply the detailed descriptions and drawings of some preferred embodiment according to the present invention; whereas the characteristics of the present invention are by no means restricted thereto, nor should be used to limit the present invention. The scope of the present invention should be delineated by the following claims, in which all embodiments conforming to the spirits of the claims in accordance with the present invention and similar variations thereof should be deemed as being embraced by the present invention. Any modifications, alternations or substitutions that skilled ones in relevant arts can conveniently consider are all deemed as falling in the scope of the present invention.

## Claims

1. A key structure with multiple appearance effects simultaneously presented at different angles of view, comprising:
a multi-mode appearance layer, in which the surface thereof has a plurality of micro-structures which reflect the incident light sources of different wavelengths to different angles;
an elastic structure layer, which is placed under the multi-mode appearance layer; and
a keypad structure layer, which is placed on the multi-mode appearance layer,
thereby, through the micro-structures reflecting the incident light sources of different wavelengths to different angles, a user can see different appearance effects of different patterns at different angles of view.

2. The key structure according to claim 1, wherein the micro-structures are divided into at least two micro-structure sets with different appearance effects; thus, through the at least two micro-structure sets with different appearance effects, a user can see at two sets of appearance effects corresponding to the keypad structure layer at different angles of view.

3. The key structure according to claim 1, wherein the elastic structure is made of silicon material.

4. The key structure according to claim 1, wherein the keypad structure layer is composed of a plurality of keys.
